# EUROPEAN PATENT APPLICATION

(11) **EP 2 113 727 A2**
(43) Date of publication of application: **04.11.2009**
(21) Application number: 09158826.9
(22) Date of filing: 27.04.2009
(51) Int. Cl.: F24J 2/12, F24J 2/07, F24J 2/24

(54) **System for converting solar radiation into thermal energy**

(30) Priority: 30.04.2008 IT MI20080803
(71) Applicant: Leonardi, Marco, 28040 Varallo Pombia (NO) (IT); Zocchi, Mr. Alessandro, 20020 Arconate (MI) (IT)
(72) Inventor: Leonardi, Marco, 28040 Varallo Pombia (NO) (IT); Zocchi, Mr. Alessandro, 20020 Arconate (MI) (IT)
(74) Representative: Colombo, Stefano Paolo

(57) **Abstract**

It is disclosed a system for converting solar radiation into thermal energy, said system comprising a collector configured to generate thermal energy when said solar radiation strikes it, a concentrator configured to concentrate the solar radiation on the collector, a hydraulic circuit configured to convey an exchange fluid for transferring said thermal energy to a heat accumulator. The concentrator comprises a support structure having a continuous surface in the form of a paraboloid of revolution and a reflective layer applied to said continuous surface so as to form a reflective surface of the concentrator.

## Description

### Technical Field

The present invention relates to the field for the production of thermal energy. In particular, the present invention relates to a system for converting solar radiation into thermal energy.

### Background Art

As is known, systems which allow conversion of solar radiation into thermal energy are known in the art. These systems generally comprise a collector, i.e. a component optimized to increase its temperature by means of a process for absorbing solar radiation.

In the art, systems referred to as "high-temperature" systems and systems referred to as "low-temperature" systems are known.

The high-temperature systems are configured to heat the collector to a temperature in the region of a few hundred degrees centigrade (for example 200°C to 400°C), and are typically used for industrial applications such as, for example, the production of steam for powering industrial plants (for example, electric power station turbines). In these systems, the solar radiation is focused on the collector by means of a solar concentrator, namely a structure comprising one or more mirrors or one or more converging lenses. The solar concentrator is generally moved by an alignment system which modifies its direction during the day, so that the solar radiation is always focused on the collector.

On the other hand, the low-temperature systems are configured to heat the collector to a maximum temperature of less than 100°C (for example 95°C), and are typically used for domestic purposes such as, for example, heating water for domestic use, heating swimming pools, etc. In these systems the solar radiation may be reflected onto the collector by means of one or more flat mirrors, or may be focused onto the collector by means of a concentrator. In this type of system also generally an alignment system is used to modify the direction of the flat mirrors or the concentrator during the course of the day, so that the solar radiation is always directed onto the collector.

For applications in low-temperature systems, the company Heliotrack has developed a parabolic solar concentrator consisting of eight aluminium segments which form a substantially parabolic support, to which strips of metalized boPET (biaxially-oriented polyethylene terephthalate, most commonly known by the trade names Mylar© and Melinex©) are glued.

### Summary of the Invention

The inventors have noted that the above-described systems for converting solar radiation into thermal energy have a number of drawbacks.

In particular, in the case of low-temperature systems, the parabolic solar concentrator described above disadvantageously does not allow concentrating the solar radiation onto the collector in an optimum manner, since its reflective surface has rough zones. These rough zones are present both along the lines where the segments of the support are joined together and along the edges of the boPET strips.

This has the disadvantageous consequence that the time required to raise the temperature of the collector to that needed for typical domestic applications is very long and that this temperature may not even be reached in periods of the year where, during the day, the solar radiation is not present for a sufficiently long period of time.

Moreover, the inventors have noted that disadvantageously the support structure of the above-mentioned known parabolic solar concentrator, since it is made of metal, is heavy. This results disadvantageously in the need to provide a very complex and costly support structure and alignment system mechanism. Moreover, owing to the considerable weight of the concentrator, the operations required for transportation and installation of the concentrator (and therefore the entire system) are complex.

The inventors have also noted that the application of the boPET strips in order to form the reflective surface is a complex and long operation difficult to perform in an automated manner. This results in the disadvantage that the above-mentioned known parabolic solar concentrator is difficult to reproduce on an industrial scale at a low cost.

Therefore, an object of the present invention is to provide a system for converting solar radiation into thermal energy which solves at least one of the above-mentioned problems.

In particular, an object of the present invention is to provide a system for converting solar radiation into thermal energy which is able to focus more efficiently the solar radiation onto the collector, so as to allow the collector to reach the required temperature considerably more quickly than the known systems.

Moreover, an object of the present invention is to provide a system for converting solar radiation into thermal energy which has a concentrator which is lighter than the above-mentioned known parabolic concentrator, so that it may be transported and installed easily and may be moved, following installation, using a simple mechanism.

Moreover, an object of the present invention is to provide a system for converting solar radiation into thermal energy which can be easily reproduced on an industrial scale at a low cost.

One or more of the above objects are achieved, according to embodiments of the present invention, by a system for converting solar radiation into thermal energy comprising a collector configured to generate thermal energy when the solar radiation strikes it, a concentrator configured to concentrate the solar radiation onto the collector, a hydraulic circuit configured to convey an exchange fluid for transferring the thermal energy to a heat accumulator, the system being **characterized in that** the concentrator comprises a support structure having a continuous surface in the form of a paraboloid of revolution and a reflective layer applied to the continuous surface so as to form a reflective surface of the concentrator. In the remainder of the present description and the claims, the expression "continuous surface" will indicate a surface which is formed integrally and substantially without roughness, irregularities or interruptions. Further, in the present description and in the claims, the expression "heat accumulator" will indicate an element suitable for receiving thermal energy from the collector. For instance, the "heat accumulator" may be the water stored in a tank to be heated for domestic use, the water of a swimming pool, and so on.

Preferably, the reflective layer is a continuous reflective layer.

Preferably, the reflective layer comprises a film of a thermally insulating, heat-deformable material and has a metalized surface.

Preferably, the reflective layer comprises a film of metalized biaxially-oriented polyethylene terephthalate.

Profitably, the reflective layer is applied to the continuous surface by means of a vacuum thermoforming process.

According to preferred embodiments, the reflective layer is applied to the continuous surface by means of an electrochemical process for metalizing the continuous surface.

According to other preferred embodiments, the reflective layer is applied to the continuous surface by means of a melting process for metalizing the continuous surface.

Preferably, the support structure is made of a structural resin.

Preferably, the structural resin is a glass-reinforced polyurethane resin.

Profitably, the collector comprises a hollow housing and a coil connected to the hydraulic circuit and housed inside the hollow housing, the hollow housing being filled with a thermally conductive fluid.

Preferably, the thermally conductive fluid is the same as the exchange fluid.

Profitably, the hollow housing has the form of a cup with a bottom, the bottom having a convex shape.

Preferably, the hollow housing has a cylindrical side cavity, the coil having a helical form and being housed inside the cylindrical side cavity.

Preferably, the system also comprises a temperature sensor inserted inside the hollow housing, the temperature sensor comprising an immersion probe immersed in the thermally conductive fluid.

Preferably, the hollow housing is externally lined with a thermally insulating layer.

### Brief description of the drawings

The present invention will emerge more clearly from the following detailed description of embodiments of the present invention, provided by way of a non-limiting example, to be read with reference to the accompanying drawings in which:
- Figure 1 shows schematically a system for converting solar radiation into thermal energy according to an embodiment of the present invention;
- Figure 2 shows in greater detail the concentrator and the collector of the system of Figure 1;
- Figures 3a and 3b are, respectively, a side view and a cross-sectional view of the collector;
- Figure 4 is a side view of the concentrator and the collector showing in detail the connection between the concentrator and the collector;
- Figures 5a and 5b are, respectively, a front view and a side view of the module for supporting and moving the concentrator;
- Figure 6 is a flow chart of the operation of the first control unit; and
- Figure 7 is a flow chart of the operation of the second control unit.

### Detailed description of preferred embodiments of the invention

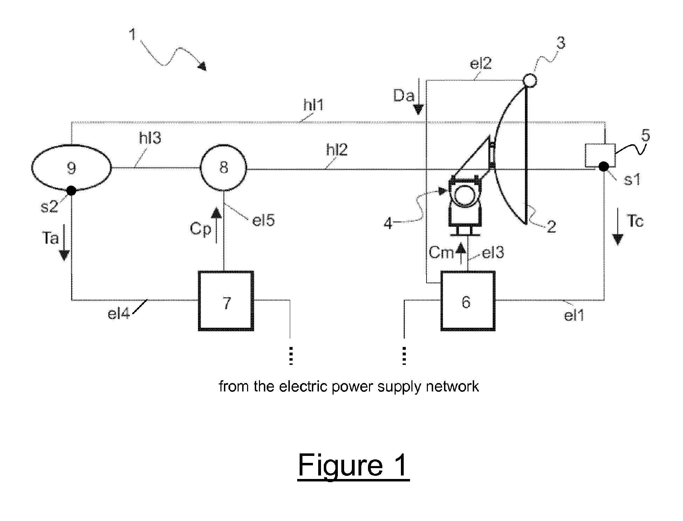

Figure 1 schematically shows a system 1 for converting solar radiation into thermal energy, according to an embodiment of the present invention.

The system 1 comprises a concentrator 2, an alignment sensor 3, a support and movement module 4, a collector 5, a first control unit 6 and a first temperature sensor s1.

Preferably, the first temperature sensor s1 cooperates with the collector 5 so as to detect the collector temperature Tc. Moreover, preferably, the first control unit 6 is connected to the first temperature sensor s1 via a first electrical line el1, to the alignment sensor 3 via a second electrical line el2 and to the support and movement module 4 via a third electrical line el3. Preferably, the first control unit 6 is connected to the electric power supply network (not shown in Figure 1) from which it draws a power supply.

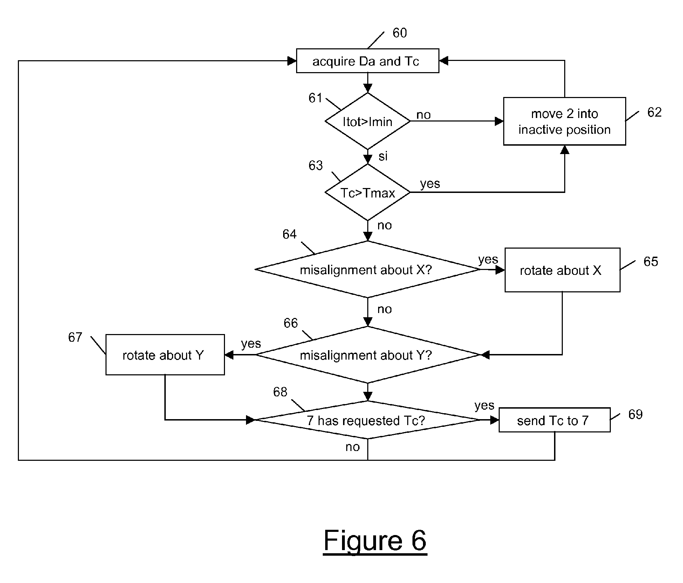

Preferably, the first control unit 6 is configured to provide electric power to the first temperature sensor s1, the alignment sensor 3 and the support and movement module 4 via the electrical lines el1, el2 and el3, respectively. Moreover, preferably, the first control unit 6 is configured to receive the temperature Tc of the collector 5 from the first temperature sensor s1 and a set of alignment data Da from the alignment sensor 3. Moreover, the first control unit 6 is configured to process the temperature Tc and the alignment data Da so as to generate a movement command Cm, and send the movement command Cm to the support and movement module 4, in order to control the position of the concentrator 2 depending on the position of the sun and the temperature Tc of the collector 5, as will be described in greater detail below with reference to Figure 6.

Moreover, preferably, the system 1 comprises a second control unit 7, a hydraulic pump 8, a heat accumulator 9 and a second temperature sensor s2. As mentioned above, the heat accumulator 9 may be any element suitable for receiving thermal energy from the collector 5. For instance, the heat accumulator 9 may be the water stored in a tank to be heated for domestic use, the water of a swimming pool, and so on.

Preferably, the second temperature sensor s2 cooperates with the heat accumulator 9 so as to detect its temperature Ta. Moreover, preferably, the second control unit 7 is connected to the second temperature sensor s2 via a fourth electrical line el4 and to the hydraulic pump 8 via a fifth electrical line el5. Preferably, also the second control unit 7 is connected to the electric power supply network (not shown in Figure 1) from which it draws a power supply.

Moreover, preferably, the collector 5 is connected to the heat accumulator 9 via a first hydraulic line hl1 and to the hydraulic pump 8 via a second hydraulic line hl2. Moreover, preferably, the hydraulic pump 8 is connected to the heat accumulator 9 via a third hydraulic line hl3. Therefore, the collector 5, the first hydraulic line hl1, the heat accumulator 9, the third hydraulic line hl3, the hydraulic pump 8 and the second hydraulic line hl2 form a hydraulic circuit inside which a fluid which will be referred to below as "exchange fluid" can flow, and is able to convey the thermal energy generated by the collector 5 to the heat accumulator 9. Preferably, the exchange fluid is a thermoconductive fluid such as, for example, a diathermic oil.

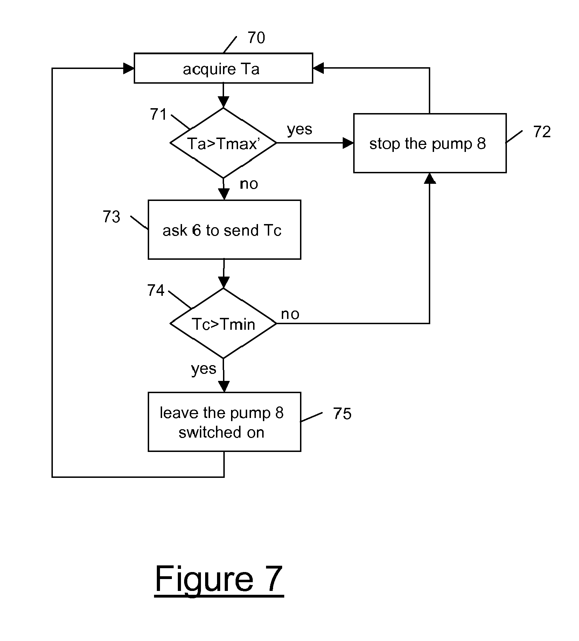

Preferably, the second control unit 7 is configured to provide electric power to the second temperature sensor s2 and to the hydraulic pump 8 via the electrical lines el4 and el5, respectively. Moreover, preferably, the second control unit 7 is able to receive the temperature Ta of the heat accumulator 9 from the second temperature sensor s2, process the temperature Ta so as to generate a pump command Cp and send the pump command Cp to the hydraulic pump 8, so as to control the flow of the exchange fluid inside the hydraulic circuit depending on the temperature of the heat accumulator 9, as will be described in greater detail below with reference to Figure 7.

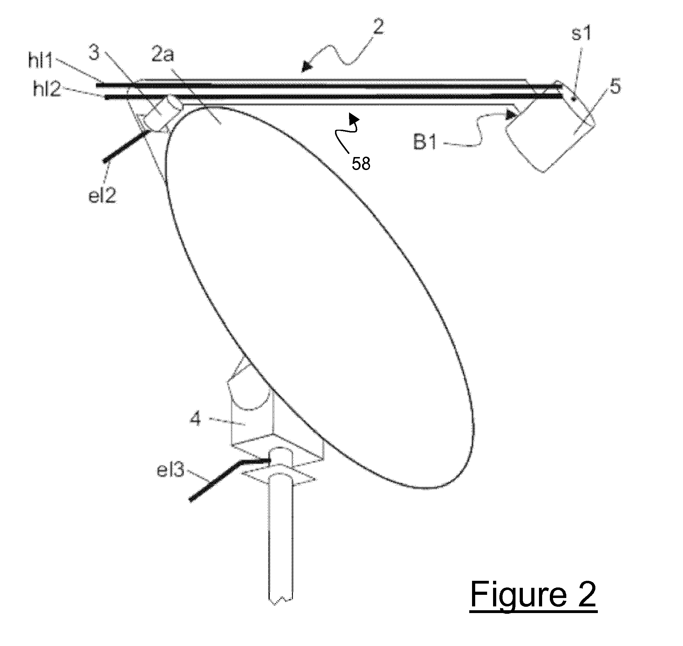

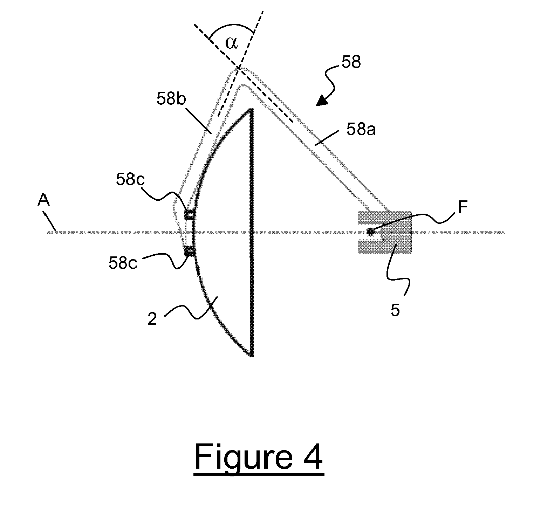

With reference to Figure 2, according to a particularly preferred embodiment of the present invention, the concentrator 2 has a reflective surface 2a substantially in the form of a paraboloid of revolution, i.e. a surface which, in a Cartesian xyz reference system, is defined by the following equation: x²+y²-z=0. The inventors have in fact noted that the more closely the reflective surface 2a of the concentrator 2 resembles in form a paraboloid of revolution, the greater will be the efficiency with which the solar radiation reflected by the reflective surface 2a is concentrated on the collector 5, when the collector 5 is positioned on the focal axis (indicated as A in Figure 4) in the vicinity of the focus (indicated as F in Figure 4) of the paraboloid of revolution.

The inventors have also noted that, the smoother the reflective surface 2a (i.e. the fewer the rough zones and the irregularities), the greater will be the efficiency with which the solar radiation reflected by the said surface is concentrated on the collector 5.

Moreover, the inventors have noted that, when the solar radiation strikes a reflective surface, it is partly reflected and partly refracted (i.e. transmitted beyond the reflective surface). The quantity of solar radiation reflected increases with a reduction in the difference between the refractive index of the reflective surface (typically greater than 1) and the refractive index of the air (substantially equal to 1). Therefore, the inventors have realised that, in order to minimize the refraction of the solar light which strikes the reflective surface 2a (and which therefore cannot be concentrated on the collector 5), the reflective surface 2a must have a refractive index which is as low as possible (i.e. as close as possible to 1).

Moreover, the inventors have noted that, since most of the energy transported by the solar radiation is concentrated in the infrared frequencies, the maximum efficiency of reflection of the solar radiation on the collector 5 may advantageously be obtained using a material which has a maximum reflectivity in the infrared frequency range.

Moreover, the inventors have noted that when the solar radiation strikes a reflective surface, part of the radiation is absorbed by the material from which the surface is made. This disadvantageously induces heating of the surface itself, which may cause damage to the surface or the bodies in thermal contact therewith. These effects increase disadvantageously with an increase in the mass of the material from which the reflective surface is made. The inventors have therefore realised that, in order to minimize the above-mentioned effects, the reflective surface 2a must be as thin as possible and thermally insulated as far as possible from the rest of the concentrator 2.

In the light of the above considerations, the inventors have perceived that a concentrator 2 with the above-mentioned characteristics may be obtained by providing firstly a support structure which has a surface (referred to below simply as "parabolic surface") with a form as similar as possible to that of a paraboloid of revolution, and then applying to the parabolic surface a reflective layer which is as thin as possible and made of a material which has a refractive index as low as possible and, at the same time, a maximum reflectivity in the infrared frequency range.

Preferably, the thickness of the reflective material ranges between 1 and 15 mils. More preferably, the thickness of the reflective layer ranges between 5 and 8 mils. Preferably, the maximum reflectivity of the reflective layer in the infrared frequency range is greater than 75% and more preferably is greater than 95%.

After carrying out various tests, the inventors have found that the support structure of the concentrator 2 may advantageously be made of a structural resin, for example a glass-reinforced polyurethane resin (i.e. a polyurethane resin with glass fibers for increasing its mechanical properties). As a result it is possible to obtain advantageously a light support structure which may therefore be easily transported and installed. The diameter of the concentrator 2 is preferably between 800 mm and 1600 mm, more preferably between 1000 mm and 1400 mm, even more preferably of 1200 mm.

As regards the reflective layer, it preferably consists of a film of a thermally insulating material with a metalized surface. The film preferably comprises a heat-deformable material. As a result, the film may be advantageously applied to the parabolic surface by means of a vacuum thermoforming process.

By way of example, the above-mentioned thermoforming process could be performed as described below. A hole is formed in the centre of the support structure of the concentrator 2. A layer of adhesive is applied to the parabolic surface of the support structure and/or to the non-metalized side of a film made of heat-deformable and thermally insulating material which has a metalized surface. By way of an adhesive layer, the inventors have carried out positive tests using both non-structural glues (such as, for example, 3M Super 77) and epoxy-based structural glues (such as, for example, glues of the Araldite family). The film is then fixed to the support structure along the edge of the parabolic surface with the non-metalized side directed towards the parabolic surface, so that the portion of film covering the parabolic surface is substantially taut. A vacuum pump is then connected to the support structure via a hole formed in the centre thereof and, substantially at the same time, the film is heated to a temperature of about 100° C. When subjected to the heat and vacuum, the film is deformed until its non-metalized side adheres substantially perfectly to the parabolic surface of the support structure. In this way, advantageously, the formation of folds and roughness in the metalized film is kept to a minimum, thus allowing a substantially smooth reflective surface 2a to be obtained.

The inventors have carried out positive tests using an aluminium-metalized polyester fabric and a fabric consisting of metalized boPET.

As an alternative to application of the film, the reflective surface 2a may be obtained by performing metallization of the parabolic surface of the support structure by means of an electrochemical process, in particular electrodeposition (such as chrome-plating for example). Alternatively, the metallization of the parabolic surface of the support structure may be performed by a vacuum metallization (similar to the process for metalizing the headlights of a car).

Therefore, advantageously, the concentrator 2 allows to focus more efficiently the solar radiation on the collector 5 compared to known concentrators, owing to the fact that the reflective surface 2a has the form substantially of a paraboloid of revolution and is substantially devoid of roughness and folds. Therefore, advantageously, the concentrator 2 enables the collector 5 to reach the required temperature considerably more rapidly than the known systems. On the other hand, the concentrator 2 advantageously allows to achieve temperatures much higher than those usually required for domestic applications and is therefore suitable also for applications of an industrial nature.

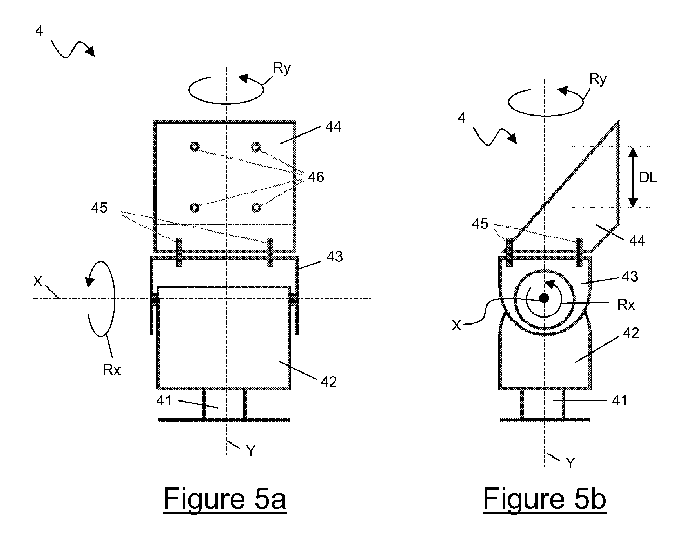

Moreover, advantageously, the concentrator 2 is lighter than the known parabolic concentrator described above, and therefore may be easily transported and installed. It may also be moved, following installation, using a relatively simple mechanism, as will be described in detail below with reference to Figures 5a and 5b.

Moreover, the concentrator 2 may be easily reproduced on an industrial scale at a relatively low cost. The vacuum thermoforming process described above is in fact a process which can be easily automated and which may be easily realised on an industrial scale.

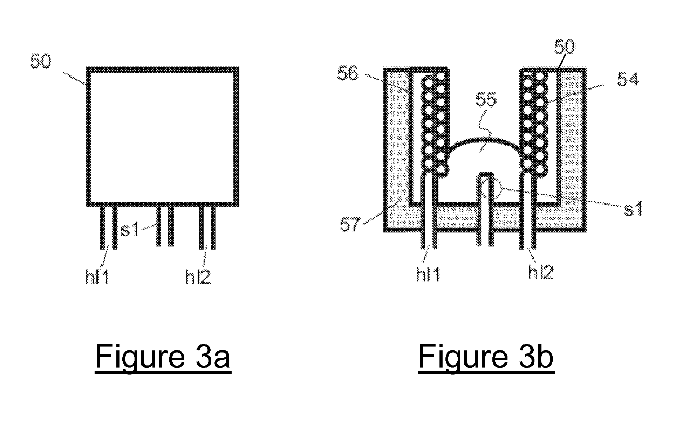

With reference to Figures 3a and 3b, the collector 5 preferably comprises a housing 50. Preferably the housing 50 of the collector 5 has a cup-shaped form with a relatively thick cylindrical side wall and a bottom. A cavity 56 is formed between the outer side wall of the cup and the inner wall thereof as well as between the bottom and the base of the cup. Preferably, a helical shaped coil 54 is housed inside the cavity 56. Preferably, the opposite ends of the coil 54 are connected to the first and second hydraulic lines hl1 and hl2. In this way, the coil 54 forms part of the hydraulic circuit which has, flowing inside it, the exchange fluid configured to convey the thermal energy from the collector 5 to the heat accumulator 9. Preferably, the coil 54 is made of a thermally conductive material, for example a metal. More preferably, the coil 54 is made of copper.

Moreover, preferably, the first temperature sensor s1 is inserted inside the cavity 56 via a suitable opening present in the housing 50 (not shown in Figures 3a and 3b). Preferably, the first temperature sensor s1 comprises an immersion temperature probe.

Moreover, preferably, the bottom surface of the cup has a convex shape 55. This enables advantageously the solar radiation reflected by the reflective surface 2a to be focused more efficiently on the inner cylindrical side wall of the housing 50.

Moreover, preferably, the cavity 56 of the housing 50 is filled with a thermally conductive fluid. Preferably, the thermally conductive fluid is of the same type as the exchange fluid which flows inside the coil 54 and inside the remainder of the hydraulic circuit. This advantageously allows to avoid exposing the coil 54 directly to the solar radiation reflected by the reflective surface 2a. In this way, advantageously, the coil 54 is prevented from reaching excessively high temperatures which could damage it. Moreover, owing to the presence of the fluid inside the cavity 56, it is possible to distribute uniformly the thermal energy which is produced inside the housing 50 during exposure to the solar radiation.

Moreover, preferably, the outer cylindrical side wall and the base of the cup are lined with a thermally insulating layer 57. This advantageously prevents the dispersion of the thermal energy generated by the collector 5 into the surrounding air. Moreover, this advantageously prevents anyone using the system 1 from coming into direct contact with the collector 5. In fact, because of the high efficiency of the concentrator 2, the collector 5 may reach very high temperatures (of a few hundred degrees or so) very rapidly and could therefore cause scalding of a person coming into contact therewith either voluntarily or accidentally.

Preferably, the collector 5 is fixed to the concentrator 2 so that the focus F of the reflective surface 2a of the concentrator 2 is contained inside the cup (as shown in Figure 4) and so that the axis of the cup coincides with the focal axis A of the reflective surface 2a.

The collector 5 is preferably fixed to the concentrator 2 by means of a fixing arm 58 (not shown in Figure 1, for simplicity). The fixing arm 58 preferably has a first portion 58a and a second portion 58b. Both the first portion 58a and the second portion 58b are substantially straight. Preferably, the length of the first portion 58a is between 600 mm to 1000 mm, more preferably between 700 mm and 900 mm, even more preferably 800 mm. Preferably, the length of the second portion 58b is between 400 mm and 600 mm, more preferably between 450 mm and 550 mm, even more preferably 500 mm. At one of its ends, the first portion 58a is fixed to an end of the second portion 58b so as to form an angle α. The angle α is preferably between 25° and 45°, more preferably between 30° and 40°, even more preferably 35°. The free end of the first portion 58a is fixed to the collector 5 by suitable fixing means (not shown in the drawings), at a point B1 of the collector 5 (see Figure 2). The free end of the second portion 58b is preferably tapered, and is fixed to the non-reflective surface of the concentrator 2, as shown in Figures 2 and 4, by means of suitable fixing elements 58c (e.g. threaded elements such as bolts). More particularly, the free end of the second portion 58b is fixed to the non-reflective surface of the concentrator 2 at the intersection between the non-reflective surface and the axis A.

Figures 5a and 5b show in greater detail a possible embodiment of the support and movement module 4. Preferably, the support and movement module 4 comprises a support post with a vertical axis Y, a first body 42 rotatable about the axis Y, a second body 43 rotatable about a horizontal axis X and a bracket 44 fixed to the second body 43 and configured to support the concentrator 2. The bracket 44 is fixed to the second body 43 by means of fixing members 45 (for example screws and bolts or welds). Figure 5a also shows the holes 46 which allow the concentrator 2 to be fixed to the bracket 44.

In any case, whatever the embodiment of the module 4, it must be able to allow rotation of the concentrator 2 about a horizontal axis and about a vertical axis.

The support post 41 may be fixed to the ground or may be fixed to a wall by means of a suitable arm.

Preferably, the alignment sensor 3 is fixed at the supporting arm 58, in particular at the second portion 58b of the supporting arm 58 (see Figure 2), so that it is positioned at the edge of the reflective surface 2a of the concentrator 2. Preferably, the alignment sensor 3 is configured so as to determine the direction of the solar radiation received by the concentrator 2 with respect to the focal axis A of the reflective surface 2a.

For this purpose, the alignment sensor 3 preferably comprises four photosensors (for example photodiodes or phototransistors) which are sensitive to the visible spectrum and to the infrared spectrum (not shown in the figures). Preferably, the four photosensors are arranged with their photosensitive surfaces directed perpendicularly with respect to the focal axis A of the reflective surface 2a, so that each of them is positioned in a respective quadrant of a Cartesian reference system defined by an axis X' parallel to the horizontal axis X and by an axis Y' parallel to the vertical axis Y, shown in Figure 5a. Advantageously, the alignment data Da which the alignment sensor 3 sends to the first control unit 6 comprise the luminous intensity which are received by each of the four photosensors.

As mentioned above, the first control unit 6 preferably receives the temperature Tc of the collector 5 from the first temperature sensor s1 and the alignment data Da from the alignment sensor 3 and processes it in order to generate a movement command Cm to be sent to the support and movement module 4.

With reference to Figure 6, when the first control unit 6 receives the temperature Tc and the alignment data Da (step 60), it preferably checks whether the total luminous intensity Itot received by the alignment sensor 3 is greater than a predetermined threshold intensity Ith (step 61). Preferably, the total intensity Itot is equal to the sum of the luminous intensities received by the individual photosensors contained in the alignment sensor 3. If this is not the case, the first control unit 6 establishes that the luminous radiation does not have a sufficient intensity to activate the system 1, and therefore performs a step 62 where it sends to the support and movement module 4 a movement command Cm which causes the module 4 to move the concentrator 2 into an inactive position. Preferably, the inactive position is a position such that the concentrator 2 does not focus any solar radiation on the collector 5. For example, an inactive position may be a position where the focal axis A of the concentrator 2 is directed substantially perpendicularly with respect to the solar radiation, such that the concentrator 2 does not intercept substantially any solar radiation. Moreover, preferably, during the step 62 the alignment sensor 3 is set to a mode where it is able to detect the diffused solar radiation and not the direct solar radiation. In this way, even if the alignment sensor 3 is not directed towards the sun, it is in any case able to detect the increases in luminosity.

If, on the other hand, the total luminous intensity Itot is greater than the threshold luminous intensity Ith, preferably the first control unit 6 checks whether the temperature Tc of the collector 5 is greater than a maximum temperature Tmax (step 63). Preferably, the maximum temperature Tmax is chosen by the manufacturer of the system 1 as the maximum temperature which the collector 5 may withstand without suffering damage or constituting a danger for the user. The temperature Tmax depends on the characteristics of the collector 5, in particular its size, the material from which the housing 50 is made and the fluid which fills the cavity 56 and the coil 54.

If the temperature Tc of the collector 5 is greater than the maximum temperature Tmax, the first control unit 6 preferably performs the above-mentioned step 62. In this way, advantageously, the solar radiation is prevented from being continuously concentrated on the collector 5, thus allowing the collector 5 to lower its temperature.

If, instead, the temperature Tc of the collector 5 is less than the maximum temperature Tmax, the control unit 6 preferably processes the alignment data Da to check whether there is misalignment of the solar radiation with respect to the focal axis A of the reflective surface 2a about the axis X, namely whether the solar radiation and the focal axis A form an angle other than zero in a plane perpendicular to the horizontal axis X (step 64). The step 64 is preferably performed by establishing the difference between the luminous intensity received overall by the photosensors in the upper quadrants of the Cartesian reference system defined by X' and Y' and the luminous intensity received overall by the photosensors positioned in the lower quadrants.

If there is a misalignment of the solar radiation with respect to the focal axis A of the reflective surface 2a about the axis X, the control unit 6 performs a step 65 where it sends to the support and movement module 4 a movement command Cm which causes the module 4 to modify the direction of the concentrator 2, rotating it about the axis X (i.e. as indicated by the arrow Rx shown in Figures 5a and 5b).

If, instead, there is no misalignment of the solar radiation with respect to the focal axis A of the reflective surface 2a about the axis X, the control unit 6 preferably processes the alignment data Da in order to check whether there is misalignment of the solar radiation with respect to the focal axis A of the reflective surface 2a about the axis Y, i.e. whether the solar radiation and the focal axis A form an angle other than zero in a plane perpendicular to the vertical axis Y (step 66). The step 66 is preferably performed by determining the difference between the luminous intensity received overall by the photosensors positioned in the right-hand quadrants of the Cartesian reference system defined by X' and Y' and the luminous intensity received overall by the photosensors positioned in the left-hand quadrants.

If there is a misalignment of the solar radiation with respect to the focal axis A of the reflective surface 2a about the axis Y, the control unit 6 performs a step 67 where it sends to the support and movement module 4 a movement command Cm which causes the module 4 to modify the direction of the concentrator 2, rotating it about the axis Y (i.e. as indicated by the arrow Ry shown in Figures 5a and 5b).

If, instead, there is no misalignment of the solar radiation with respect to the focal axis A of the reflective surface 2a about the axis Y, the control unit 6 preferably checks whether the second control unit 7 has asked to receive the temperature Tc of the collector 5 (step 68). If this is the case, the first control unit 6 sends the temperature Tc to the second control unit 7 (step 69). If this is not the case, the control unit 6 performs again the above-mentioned step 60.

Preferably, the steps 60-69 described above are performed periodically every five seconds, so as to maintain a substantially optimum alignment between the focal axis A of the concentrator 2 and the solar radiation during the course of the day, and so as to check constantly that the temperature Tc of the collector 5 does not exceed the maximum temperature Tmax.

As mentioned above, the second control unit 7 preferably receives the temperature Ta of the heat accumulator 9 from the second temperature sensor s2 and processes it in order to send a pump command Cp to the hydraulic pump 8.

More particularly, when the second control unit 7 receives the temperature Ta from the second temperature sensor s2 (step 70), it preferably checks whether the temperature Ta is greater than a maximum temperature Tmax' (step 71). Preferably, the maximum temperature Tmax' may be set by the user of the system 1. For example, if the system 1 is used to heat the water in a swimming pool, the maximum temperature Tmax' may be chosen as the temperature of the water which is to be introduced into the swimming pool.

If the temperature Ta is greater than the maximum temperature Tmax', the second control unit 7 preferably sends to the hydraulic pump 8 a switch-off command Cp (step 72). In this way, advantageously, the exchange fluid ceases to flow inside the hydraulic circuit and therefore the conveying of thermal energy from the collector 5 to the heat accumulator 9 stops. In this way, the heat accumulator 9 is able to lower its temperature to a value below Tmax'.

If, on the other hand, the temperature Ta is less than the maximum temperature Tmax', the second control unit 7 preferably asks the first control unit 6 to send it the temperature Tc of the collector 5 (step 73).

Once the temperature Tc of the collector 5 has been received by the first control unit 6, the second control unit 7 preferably checks whether the temperature Tc of the collector 5 is greater than a minimum operating temperature Tmin of the collector 5 (step 74), below which the collector 5 does not generate a detectable quantity of thermal energy. The minimum operating temperature Tmin is also preferably set by the manufacturer of the system 1 and depends on the characteristics of the collector 5 (dimensions, material, etc).

If the temperature Tc of the collector 5 is less than the minimum operating temperature Tmin, the control unit 7 preferably performs the above-mentioned step 72, following which the hydraulic pump 8 stops. In this way the exchange fluid is prevented from flowing unnecessarily inside the hydraulic circuit and conveying the thermal energy stored by the accumulator 9 externally, in particular to the collector 5, which would dissipate it.

If, instead, the temperature Tc of the collector 5 is greater than the minimum operating temperature Tmin, the control unit 7 does not send any command Cp to the hydraulic pump 8 (step 75), which therefore remains activated and continues to cause the exchange fluid to flow inside the hydraulic circuit, i.e. the thermal energy generated by the collector 5 continues to be transferred to the heat accumulator 9. The pump 8 advantageously remains activated until the temperature Ta of the heat accumulator 9 exceeds the maximum temperature Tmax', or until the temperature Tc of the collector 5 assumes a value less than the minimum operating temperature Tmin.

Advantageously, by providing the first control unit 6 which manages the movements of the concentrator 2 and the second control unit 7 which manages the hydraulic pump 8, it is possible to simplify the electrical diagram of the system 1. In fact, the first control unit 6 may be installed in the vicinity of the concentrator 2, while the second control unit 7 may be installed in the vicinity of the heat accumulator 9 together with the hydraulic pump 8. This advantageously allows minimizing the length of all the electrical lines el1, el2, el3, el4 and el5 since it is not necessary to provide electrical lines between the location where the heat accumulator 9 is situated and the location where the concentrator 2 is installed.

Preferably, moreover, the two control units 6 and 7 may be connected together via a connection (not shown in the drawings) which they use to perform the steps 69 and 73, respectively, described above. Preferably, the connection between the control units 6 and 7 may be a cable connection (for example, a UPT Class 5 cable) or a wireless connection (for example, of the Wi-Fi type based on the TCP/IP protocol).

Although in the system 1 described above the hydraulic circuit for transferring the heat generated by the collector 5 includes a heat accumulator 9, in general the heat accumulator 9 may be replaced directly by a storage container to which the user has access such as, for example, a swimming pool containing water or a tank containing water for domestic use. In this case, advantageously, the exchange fluid which flows inside the hydraulic circuit is the fluid itself to be heated (i.e. the swimming pool water or the water for domestic use).

Moreover, advantageously, although the above-mentioned system 1 comprises a single concentrator 2 with a single collector 5, in accordance with embodiments not shown in the drawings, the system may comprise a series of concentrators, each with a respective collector. The various collectors may form part of different hydraulic circuits or may be connected in series or in parallel in a single hydraulic circuit. In this case, advantageously, the first control unit 6 independently controls the movement of each concentrator.

Moreover, preferably, according to embodiments not shown in the drawings, the concentrator 2 is equipped with an anemometer able to detect the speed of the wind which strikes the concentrator 2 and supply this speed to the first control unit 6. In this case, the control unit 6 is preferably configured to determine whether the speed detected is greater than a threshold value and, if this is so, move the concentrator 2 into the inactive position described above.

Preferably, the control unit 6 is also configured to move the concentrator 2 into the inactive position when it detects an interruption in the power supply of the electrical line.

## Claims

1. System (1) for converting solar radiation into thermal energy, comprising a collector (5) configured to generate thermal energy when said solar radiation strikes it, a concentrator (2) configured to concentrate said solar radiation onto said collector (5), a hydraulic circuit configured to convey an exchange fluid for transferring said thermal energy to a heat accumulator (9), said system (1) being **characterized in that** said concentrator (2) comprises a support structure having a continuous surface in the form of a paraboloid of revolution and a reflective layer applied to said continuous surface so as to form a reflective surface (2a) of said concentrator (2).

2. System (1) according to Claim 1, wherein said reflective layer is a continuous reflective layer.

3. System (1) according to Claim 1 or 2, wherein said reflective layer comprises a film of a thermally insulating, heat-deformable material and has a metalized surface.

4. System (1) according to Claim 3, wherein said reflective layer comprises a film of metalized biaxially-oriented polyethylene terephthalate.

5. System (1) according to Claim 3 or 4, wherein said reflective layer is applied to said continuous surface by means of a vacuum thermoforming process.

6. System (1) according to Claim 2, wherein said reflective layer is applied to said continuous surface by means of an electrochemical process for metalizing said continuous surface.

7. System (1) according to Claim 2, wherein said reflective layer is applied to said continuous surface by means of a vacuum metallization for metalizing said continuous surface.

8. System (1) according to any one of the preceding claims, wherein said support structure is made of a structural resin.

9. System (1) according to Claim 8, wherein said structural resin is a glass-reinforced polyurethane resin.

10. System (1) according to any one of the preceding claims, wherein said collector (5) comprises a hollow housing (50) and a coil (54) connected to said hydraulic circuit and housed inside said hollow housing (50), said hollow housing (50) being filled with a thermally conductive fluid.

11. System (1) according to Claim 10, wherein said thermally conductive fluid is the same as said exchange fluid.

12. System (1) according to Claim 10 or 11, wherein said hollow housing (50) has the form of a cup with a bottom, said bottom having a convex shape.

13. System (1) according to any one of Claims 10 to 12, wherein said hollow housing (50) has a cylindrical side cavity, said coil (54) having a helical form and being housed inside said cylindrical side cavity.

14. System (1) according to any one of the Claims 10 to 13, also comprising a temperature sensor (s1) inserted inside said hollow housing (50), said temperature sensor (s1) comprising an immersion probe immersed in said thermally conductive fluid.

15. System (1) according to any one of Claims 10 to 14, wherein said hollow housing (50) is externally lined with a thermally insulating layer (57).
